# EUROPEAN PATENT SPECIFICATION

(11) **EP 3 563 393 B1**
(45) Date of publication and mention of the grant of the patent: **26.10.2022**
(21) Application number: 17842422.2
(22) Date of filing: 29.12.2017
(51) Int. Cl.: H01F 1/44, B03B 5/44, B03B 9/04, B03B 9/06, C22B 7/02, C22B 7/04

(54) **METHOD OF PREPARATION OF FERRITE SOLIDS FOR A HEAVY LIQUID SUSPENSION AND USE OF FERRITE IN HEAVY LIQUID SOLIDS**
VERFAHREN ZUR HERSTELLUNG VON FERRIT-FESTSTOFFEN FÜR EINE SCHWERE FLÜSSIGE SUSPENSION UND VERWENDUNG VON FERRIT IN SCHWEREN FLÜSSIGEN SUSPENSIONEN
PROCÉDÉ DE PRÉPARATION DE SOLIDES DE FERRITE POUR UNE SUSPENSION DE LIQUIDE LOURD ET UTILISATION DE FERRITE SOUS LA FORME DE SOLIDES POUR LIQUIDE LOURD

(30) Priority: 30.12.2016 PL 42004816
(43) Date of publication of application: 06.11.2019
(73) Proprietor: Ecoback SP Z O.O., 02-017 Warszawa (PL); Akademia Górniczo-Hutnicza im. Stanislawa Staszica, 30-059 Kraków (PL)
(72) Inventor: MIKOLAJCZYK, Piotr, 02-713 Warszawa (PL); FOSZCZ, Dariusz, 30-230 Kraków (PL); GAWENDA, Tomasz, 31-340 Kraków (PL); KRAWCZYKOWSKI, Damian, 32-061 Rybna (PL); KRAWCZYKOWSKA, Aldona, 32-061 Rybna (PL); KEPYS, Waldemar, 30-011 Kraków (PL)
(74) Representative: Patpol Kancelaria Patentowa Sp. z o.o.
(86) International application number: PCT/IB2017/058527
(87) International publication number: WO 2018/122799

(56) References cited:
- CA-A1- 2 961 441
- US-A- 4 140 628
- US-A- 4 432 868
- US-A- 4 567 026
- US-A- 5 535 891

## Description

The invention relates to ferrite solids (filler) for a heavy liquid suspension, a method of preparation thereof from waste materials and use of ferrite as heavy liquid suspension solids.

Liquids of the density higher than the density of water, referred to as heavy liquids in mineral engineering, are utilized for enrichment of raw mineral materials, in particular bituminous coal and ores, e.g. iron ores, zinc-lead, manganese, tungsten, tin ores, non-metallic ores, and numerous other useful minerals. Use of heavy liquids in raw mineral material enrichment processes was described, for instance, in the patent descriptions Nos. PL40417 i PL46223, and in a publication by Laskowski T., Blaszczynski S., Slusarek., titled "Wzbogacanie kopalin w cieczach ci 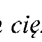 *żkich",* Śl 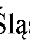 sk Editions, Katowice 1979. Such processes employ the effect of floating of grains on the liquid's surface with the density lesser than the density of the liquid, whereby a useful fraction of raw mineral materials and waste fraction are separated.

An example of a typical enrichment device employing a heavy liquid is the DISA type separator. Feed containing useful mineral products and waste is directed to the separator, where it is divided into a floating fraction and a sinking fraction within a separation chamber with a heavy liquid. The floating fraction is transferred downstream with the heavy liquid in the direction of a notch, where it is directed outside of the separator by means of a rake. Whereas the sinking fraction, after falling down to partitions of a lifting wheel, is lifted to certain height into a chute for discharging the sinking fraction.

The heavy liquid is delivered to the separators in two levels: slightly above the liquid level and in a lower portion of the separator below the liquid level. The heavy liquid flows over an overflow threshold and is directed outside the separator with the floating product. Heavy liquid circulation is closed. The heavy liquid is returned to the separator, and its depletion is made up with fresh liquid of suitable density.

There are two types of heavy liquids - homogenous and non-homogenous heavy liquids. Homogenous heavy liquids are characterized by constant density within the entire liquid volume regardless of the time. In general, these are chemical salt solutions. Non-homogenous (suspension) heavy liquids are mechanical aqueous suspension with very fine heavy mineral grains, which remain in water for some time as a suspension.

Heavy liquid suspension solids (fillers) include, for instance, magnetite - for enrichment of bituminous coals, and a magnetite (25%) and ferrosilicon (75%) mixture - for enrichment of zinc-lead ore. It is assessed that about 40 million tons of coal per year is enriched with heavy liquids in Polish coal treatment plants. As a rule, liquids of two characteristic densities are used: 1,5 g/cm³, in which coal with improved quality and environmental parameters (reduced ash, sulfur, chlorine content) is obtained, and 1,8 g/cm³, in which waste (the sinking product) is separated. At ore enrichment plants, a heavy liquid with the separation density equal to the limit maximum density of the waste components is used. In the case of the Polish zinc-lead ores the heavy liquid density at which the ore is enriched is about 2,85 g/cm³.

Solids of heavy liquid suspensions are finely ground solid grains of the density greater than 1 g/cm³, which can form a suspension in water. Fillers should be characterized by: the density twice higher than the highest density of a suspension liquid made therefrom, non-solubility in water, stability and ease of recovery. In the industrial practice, due to ease of recovery, magnetic solids, in particular fillers from magnetite and ferrosilicon, are mainly used. The basic requirements imposed on heavy liquids with magnetite solids were described in the Polish Standard No. PN-92/G-04601 "*Obci* 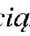 *żniki cieczy ci* 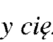 *żkiej zawiesinowej. Obciażnik magnetytowy. Wymagania i badania".*

According to the above-indicated standard the magnetite fillers should fulfil the following requirements: filler density - minimum 4 g/cm³ for artificial magnetites and 4,5 g/cm³ for magnetite; magnetic component content - at least 90%; magnetic susceptibility - at least 40% for artificial magnetites and at least 70% for magnetite; granulometry - percentage of the particular outputs of magnetite size grades should be in the following ranges: 0-10% for a grade above 0,15 mm, 60-80% for a grade below 0,06 mm and 40-50% for a grade below 0,04 mm.

The solids for a heavy liquid used to date, i.e. magnetite and ferrosilicon, are very expensive, and as no cheaper substitute has been developed so far. Therefore, there is a need for a filler for heavy liquid suspensions with properties, which would not deviate from the filler used nowadays, and which would be more economical in use. Moreover there is a need to utilize ferrite-containing waste materials, for instance, metallurgical slags, steelwork dusts, coal combustion ashes and the ferromagnetic fraction of electronic waste.

The present inventors developed ferrite solids for heavy liquid suspensions, which could substitute the presently used magnetic fillers, such as the magnetite fillers. The ferrite solids not only constitute a cheaper equivalent of the presently used fillers for heavy liquids, but also they are environmentally friendly as they are manufactured from waste materials. Moreover, a method of preparation of ferrite solids comprises solely selective crushing and physical separation of waste materials. Due to metal malleability it is possible to isolate ferrite grains from metals contained in the waste. Thus, no environment unfriendly chemical agents are required for the treatment of the ferrite filler. CA 2 961 441 A1 and US 4 432 868 A describe recycling of e.g. magnetite by repeated crushing and classification, including magnetic separation.

Described herein is a filler (solids) for a heavy liquid suspension comprising comminuted (fine-grained) ferrite of grain size no more than 0,6 mm, preferably 0,3 mm. The granulometric characteristic of the comminuted ferrite filler comprises the following ranges: 0-15% for particle size above 0,15 mm, 60-80% for particle size below 0,06 mm and 40-50% for particle size below 0,04 mm. Preferably, the granulometric characteristic of the comminuted ferrite filler comprises the following values: 13,4% for particle size above 0,15 mm, 37,1% for particle size in the range of from 0,15 mm to 0,06 mm, 9,9% for particle size in the range below 0,06 mm to 0,04 mm, and 39,6% for the size grade below 0,04 mm.

The filler as described herein comprises comminuted ferrite acquired from electronic waste, preferably from printed circuit boards (PCB), by selective comminution and mechanical classification methods.

The invention provides a method of preparation of a ferrite filler for a heavy liquid suspension comprising steps of comminution and mechanical classification of a fraction, said method comprising the steps of
a) classifying a comminuted ferrite fraction of a waste material in a mechanical classifier 0,2 - 2 mm, to form a fine screened fraction and a coarse fraction,
b) separating the fine screened fraction from step (a) in an electromagnetic separator with migrating magnetic field, where after a non-magnetic fraction is separated a ferrite fraction, which constitutes a filler for a heavy liquid suspension, is obtained,
c) comminuting the coarse 0,2 - 2 mm fraction, obtained from the classifier in step (a), preferably in a fine grinding mill,
d) recycling the fraction obtained in step (c) to the 0,2 - 2 mm classifier in step (a), and
e) optionally removing periodically a coarse metallic fraction from the 0,2 - 2 mm classifier.

Preferably, the mechanical 0,2 - 2 mm classifier from step (a) of the method of the invention is a mechanical 1 mm classifier. A designation of the classifier means that in a given step of a method a classifier with a cut-off value selected from a described range or a classifier with the specifically indicated cut-off value may be used. Further preferably, in step (a) of the method of the invention a light fraction is seized by a light fraction separator located at the end of the classifier.

In a preferred embodiment, the method of the invention comprises further the steps
(c1) where the coarse fraction obtained in step (a) from the 0,2 - 2 mm classifier is comminuted in a crusher, preferably a roll crusher,
(c2) where the fraction comminuted in step (c1) is separated in a two-deck 2 - 5 mm and 0,2 - 2 mm classifier to form three fractions: the finest screened ferrite fraction directed to the electromagnetic separator with migrating magnetic field along with the screened fraction from step (a), a coarser ferrite fraction directed to the comminuter from step (c), and the coarsest fraction comprising a metallic fraction, which is isolated from the system along with the metallic fraction from step (e),
wherein said coarser ferrite fraction obtained in step (c2) is recycled to the two-deck 2 - 5 mm and 0,2 - 2 mm classifier used in this step.

Preferably, the two-deck 2 - 5 mm and 0,2 - 2 mm classifier from step (a2) is a two-deck 4 mm and 1 mm classifier.

In a preferred embodiment the method of the invention comprises step (a1), where the coarse fraction obtained in step (a) from the 0,2 - 2 mm classifier is further separated in the mechanical 5 - 8 mm classifier, wherein the screened fine fraction is directed to the crusher in step (c1), and the coarse fraction is subject to a further treatment comprising the steps of:
f) comminuting a coarse fraction from the 5 - 8 mm classifier from step (a1) in a crusher, preferably a roll crusher,
g) mechanical classification of the fraction obtained in step (f) in a two-deck 8 - 12 mm and 5 - 8 mm classifier, said fraction from step (f) being separated into three fractions: the finest screened ferrite fraction recycled to the mechanical 0,2 - 2 mm classifier in step (a), a coarser ferrite fraction is subject to a further treatment, and the coarsest fraction being the metallic fraction, which is isolated from the system along with the metallic fraction from steps (c2) and (e),
h) comminuting the coarser ferrite fraction obtained in step (g) in a crusher, preferably a roll crusher,
i) mechanical classification of the fraction obtained in step (h) in a mechanical 5 - 8 mm classifier, said fraction from step (h) being separated into two fractions: a finer ferrite fraction recycled to the mechanical 0,2 - 2 mm classifier in step (a) and a coarser fraction being a metallic fraction, which is removed from the system along with the metallic fraction from steps (c2), (e) and (g).

Preferably, step (a1) of the method of the invention is conducted in a mechanical 6,3 mm classifier. Also preferably, steps (a) and (a1) of the invention are conducted in a sole two-deck 5 - 8 mm and 0,2 - 2 mm classifier, more preferably in a 6,3 and 1 mm classifier. Further preferably, the two-deck 8 - 12 mm and 5 - 8 mm classifier from step (g) of the method of the invention is a two-deck 10 and 6,3 mm classifier, and the mechanical 5 - 8 mm classifier from step (i) of the method of the invention is a 6,3 mm classifier.

The method of the invention is preferably conducted in a continuous manner. In an alternative preferred embodiment the method of the invention is conducted in cycles (periodically).

In a further aspect the invention provides the use of the comminuted ferrite as a filler (solids) for a heavy liquid suspension utilized in mineral engineering and a method of enrichment of raw mineral materials in mineral engineering by means of heavy liquid suspension obtained using comminuted ferrite from electronic waste..

The object of the invention is illustrated by the drawing, wherein:
Figure 1 shows a flow diagram used in the method of ferrite filler preparation according to the first embodiment of the invention;
Figure 2 shows a flow diagram used in the method of a ferrite filler preparation according to the second embodiment of the invention;
Figure 3 shows a flow diagram used in the method of a ferrite filler preparationaccording to the third embodiment of the invention;
Figure 4 shows (a) a photograph of grains of steel components (left) and ferrite (right) before comminution; and (b) a photograph of the grains of steel components (left) and ferrite (right) after crushing in a roll crusher;
Figure 5 shows a graph of increment of output of a ferrite fraction with 0-1 mm grain size in the function of grinding time in a ball mill;
Figure 6 shows a graph of the content of particular size grades for a ferrite filler of the invention (OF), and the magnetite (MP) and ferrosilicon (SiFe) fillers available on the market;
Figure 7 shows magnetization as a function of the magnetic field intensity for a ferrite filler of the invention (a), and the magnetite (b) and ferrosilicon (c) fillers available on the market;
Figure 8 shows curves of sediment accumulation for suspensions of ferrite fillers of the invention and the magnetite filler of the density of 1,5 g/cm³ (a) and 1,8 g/cm³ (b) available on the market.

### DETAILED DESCRIPTION OF THE INVENTION

The inventors have unexpectedly found that the ferrite recovered from the waste materials has properties, which make possible its use as a filler (solids) for heavy liquid suspensions. In a preferred embodiment, the starting material for the manufacture of a ferrite filler is a ferromagnetic fraction obtained from a magnetic separator, which separates the electronic waste components pre-comminuted in a hammer crusher into two fractions: a magnetic (also, ferromagnetic) and non-magnetic fraction. The ferromagnetic fraction, referred also to as feed, apart from steel components and ferrite, comprises a significant amount of undesirable components (plastics, films, copper wires, aluminum, and the like). However, the starting material for the manufacture of the ferrite filler may comprise any ferrite-containing waste material, preferably, the material containing more than 50% of ferrite, in particular metallurgical slag, steelwork dusts, coal combustion ashes.

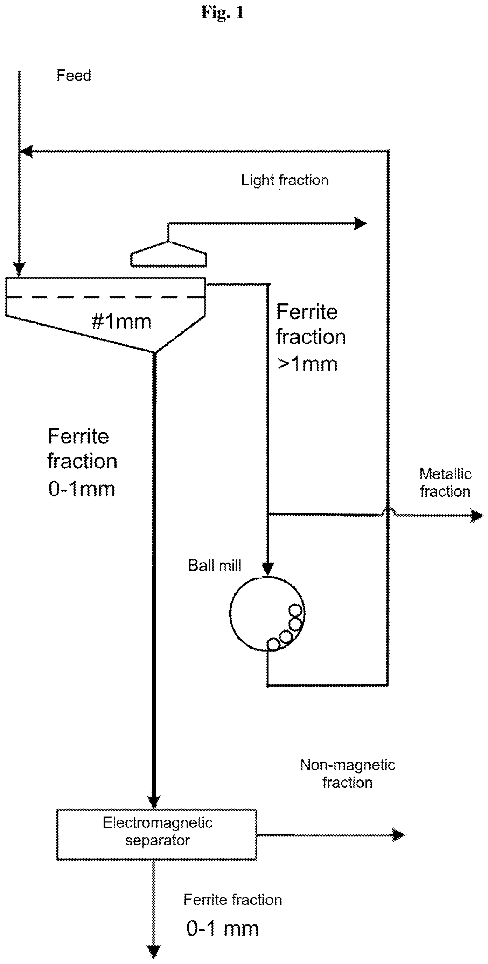

A method of ferrite filler preparation of the invention from waste materials is based on the process of selective crushing, milling and mechanical classification (separation) and magnetic separation. The method provides the highest degree of ferrite recovery. The exemplary systems for carrying out the method of the invention are shown on Figs. 1, 2 and 3.

Fig. 1 presents the simplest system for production of a ferrite filler from waste materials. In this system, a comminuted ferrite fraction of a waste material is separated on a deck screen of the mesh size of 1 mm, to form a screened fraction and a top product of a screen. The implementation of the method of the invention for separating fractions of diverse sized grains, employs deck screens as mechanical classifiers. However, in the method of the invention, pneumatic classifiers, such as vertical, scattering, zig-zag, spiral, pneumatic separation table and the like may also be used.

The screened fractions separated on a deck screen, i.e. fractions of the size smaller than 1 mm, are in the next step subject to separation in an electromagnetic separator with migrating magnetic field, where after separating a non-magnetic fraction (contaminants), a ferrite fraction, which constitutes a filler for a heavy liquid suspension, is obtained. The electromagnetic separator with migrating magnetic field (defined also as the electromagnetic separator with running magnetic field) is an essential element of the separation system, since it removes ultimately undesired non-magnetic fractions. It should be also emphasized that in the case of the method of the invention, other types of electromagnetic separators, for instance belt separators, will not separate non-magnetic contaminants with sufficient efficiency. In the implementation of the method of the invention a magnetic separator was used as described in the publication by Hycnar J.J., Kochanski B., Tora B., "Otrzymywanie i w 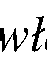 *aściwości pylu magnetycznego z ubocznych produktów spalania w* 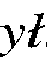 *gli*", Inzynieria mineralna, July-December 2012. However, in order to separate magnetic contaminants from finely grained ferrite, magnetic separators described in the patent descrptions PL59502B1, US1933995, US8715494, and US20130256233 may also be used.

The top fractions separated on a deck screen, i.e. with grains of the size greater or equal to 1 mm, are milled in a ball mill. Instead of the ball mill, other finely grinding mills, such as a bead, tower, quern, stream, ultrasound mill etc. may be used. Fraction obtained by milling is recycled to the screen to be separated again. In this system, metallic fraction of the grain size larger than 1 mm is removed periodically.

The system for conducting the method of the invention is further provided with a light fraction separator, such as a pneumatic separator. It is located at the end of the screen, to enable separation of fine non-magnetic fractions (e.g. dusts), but at the same time enable earlier screening-off the fine ferrite fractions.

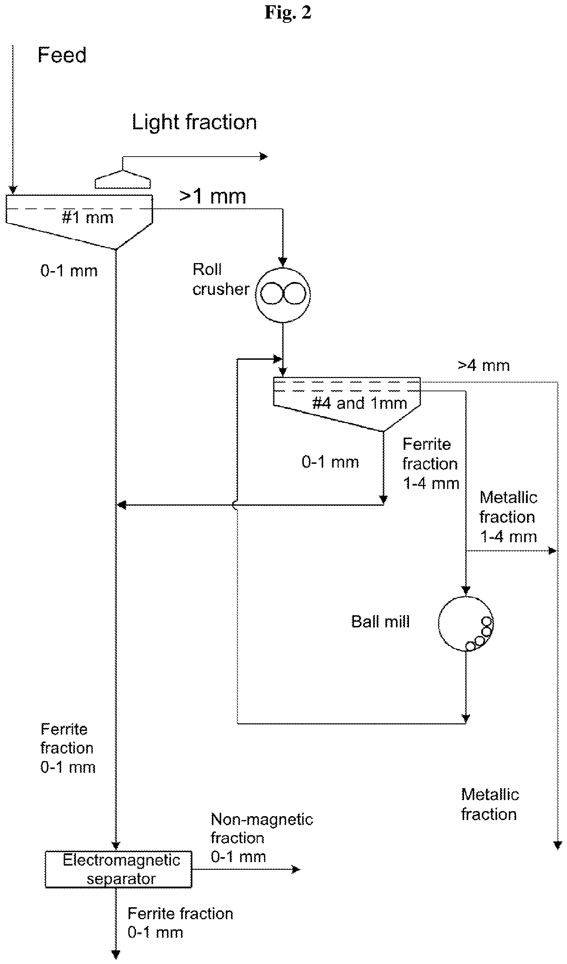

The system described above for ferrite filler production may be expanded using additional elements, which improve efficiency of the process and enable greater control of ferrite filler properties (e.g. granulometric characteristics). The example of the system is shown in Fig. 2. In this system, a roll crusher is added, where a fraction of grains equal or larger than 1 mm pre-separated on the screen is directed. In the method of the invention, instead of the roll crusher, it is possible to use a conical and jaw crusher.

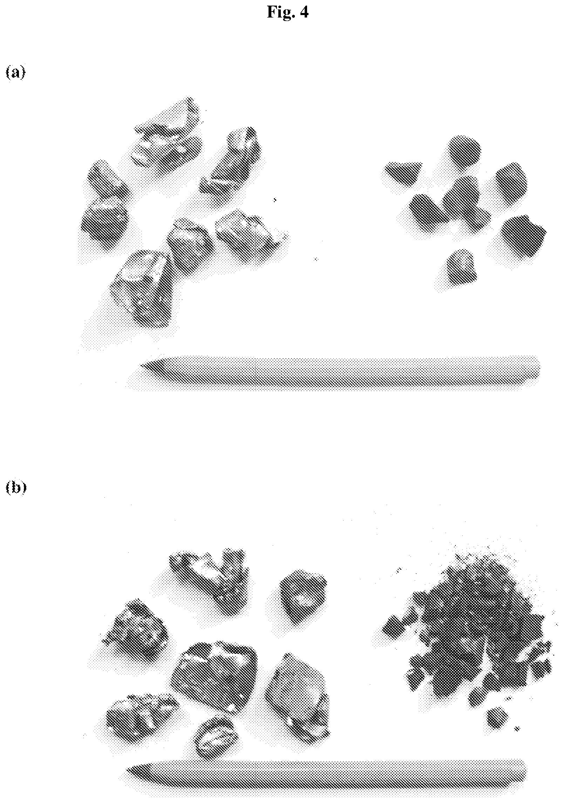

Due to the use of roll crushers, grains of ferrite are subjected to comminution, and the remaining metal (steel and aluminium) grains are compressed and increase their size. It is therefore easily possible to separate them from the comminuted ferrite grains. Figure 4 shows a photograph of the steel grain components (left) and ferrite (right) before comminution (a), and a photograph of the steel grain components (left) and ferrite (right) after crushing in a roll crusher (b).

The comminuted fraction is passed from the roll crusher to a two-deck screen with cut-off values of 4 and 1 mm. The ferrite fraction separated therewith with grain sizes less than 1 mm is then forwarded to a magnetic separator with migrating magnetic field, the ferrite fraction of the grain sizes of 1 - 4 mm is forwarded to a ball mill to be further comminuted and directed again to the two-deck screen, and the fraction with grain sizes above 4 mm is a metallic fraction to be eliminated from the system for other uses.

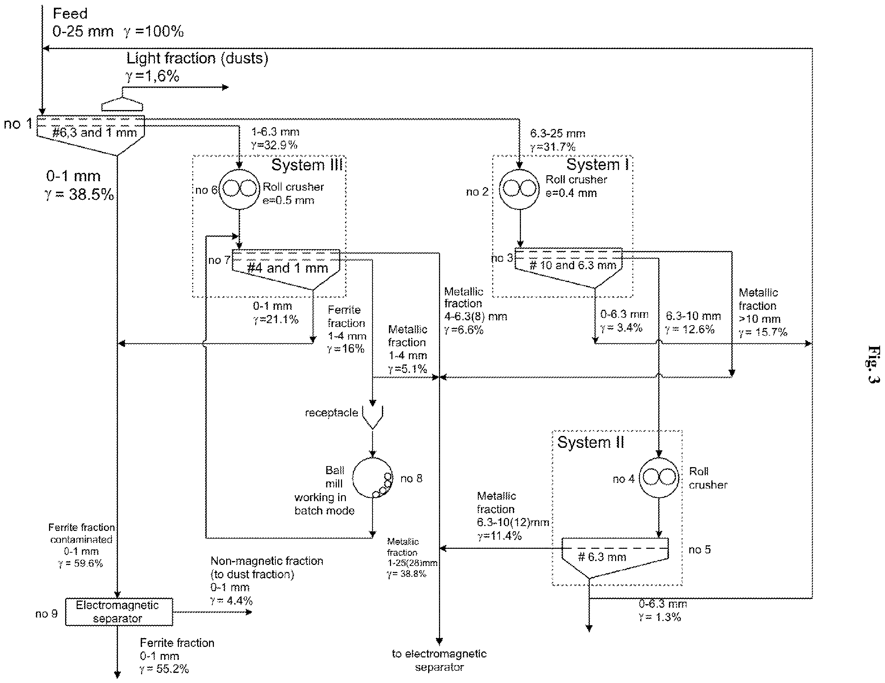

The optimum system for conducting the method of the invention is presented in the diagram in Fig. 3. This is a system which is used for the manufacture of a ferrite filler of the invention. At the start of the process, the starting material (the feed with grains of 0-25 mm) is subjected to classification in a two-deck screen (6,3 and 1 mm) and separation of light fractions. A light fraction separator installed at the end of the screen enables early screening of the fine ferrite fractions (otherwise, the fine grains of ferrite would be sucked by the separator). The top product of the 6,3-25 mm screen is comminuted in a roll crusher (system I) and classified in a consecutive two-deck screen (10 and 6,3 mm). As it was indicated before, use of roll crushers is particularly preferable, since grains of ferrite are subjected to comminution, and the remaining metal grains are compressed and increase their size. In this way, from a fraction having granulometry of 6,3-25 mm, a product of 0-28 mm is obtained, from which a metallic ferrite-free fraction of 10-28 mm is separated by screening. The 6,3-10 mm fraction is subjected to crushing in a roll crusher in system II and classified on a one-deck screen (6,3 mm), where a metallic 6,3-12 mm fraction and a ferrite 0-6,3 mm fraction are obtained. Both 0-6,3 mm fractions from the second (system I) and third (system II) screen are combined and recycled to the first screen (a starting two-deck 6,3 and 1 mm screen), where 0-1 and 1-6,3 mm grain fractions are separated by screening. The 1-6,3 mm fraction is subject to subsequent crushing in a roll crusher (system III) and screening in a two-deck 4 and 1 mm screen. The contaminated 1-4 mm ferrite fraction is collected in a charging hopper (a receptacle) and milled in a periodically operating ball mill. After milling, the product is recycled to the screen in the system III, where 0-1 mm ferrite fraction and metallic 1-4 mm fraction are separated by screening. The ferrite fraction is subject to a further processing of electromagnetic separation to purify ferrite.

Fig. 3 shows also percentages of the fractions on the basis of the starting material (feed). In the process implemented according to the diagram of Fig. 3, almost 60% of ferrite in the 0-1 mm class was obtained before the electromagnetic separation. After purification in the separator, 55% of ferrite on the basis of the entire feed was obtained, which ferrite can be used as a filler for heavy liquid suspensions.

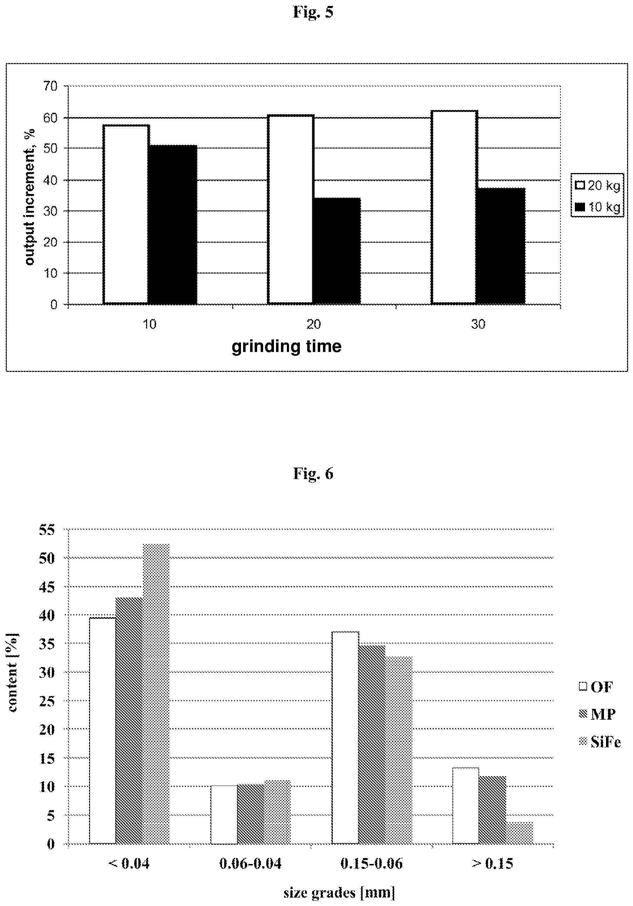

The method of the invention is advantageous in that it enables controlling sizes of the obtained grains. It is also possible to control the amount of the ferrite fraction obtained by the method of the invention. Fig. 5 shows a chart of the increment of the ferrite 0-1 mm fraction output as a function of the time of milling, which demonstrates that from the 1-4 mm feed directed to a ball mill the major part of ferrite may be recovered even after 10 min. Moreover, after 30 min the entire ferrite is comminuted into < 1 mm, which comprises 62% of ferrite in a fraction of the material fed to the ball mill.

The manufacturing process conducted according to the diagram presented on Fig. 3 may be conducted in the continuous mode (except for additional milling of the 1-4 mm ferrite fraction, as described hereinabove). However, to reduce a number of devices indispensable for conducting the method of the invention, the process may be conducted in a batch mode(i.e. periodically or in cycles). In such an embodiment, for conducting the method of the invention it is only necessary to install one roll crusher, two or even one two-deck screen with replaceable sieves, one ball mill for periodic operation and an electromagnetic separator.

Operation of the system in the batch mode comprises screening the determined amount of the material on the screen, while the screened fractions are collected in receptacles, and subsequently each fraction is subject to comminution and classification in suitable systems, as presented in Fig. 3. However, after processing the material in the system I, the system needs to be "rearmed" in a suitable manner to the form system II by changing the exit slit of the roll crusher and replacing sieves in the screen with specified parameters as shown in the diagram. Further, by screening off the 0-6,3 mm products, system II needs to be modified to the form of system III, in consequence of which the obtained intermediate product (1-4 mm ferrite fraction) after being collected in a receptacle, should be subject to milling in a ball mill in the batch mode. The time of milling in the mill should be selected empirically depending on the degree of filling the mill with the balls and the feed, granulometry of grinding aids and the time of milling to the required granulometric characteristic of the products. The milled product should be screened to isolate the 0-1 mm ferrite fraction and the waste (metallic) 1-4 mm fraction, as it is shown on the diagram with the screen in system III. The 0-1 mm ferrite fraction, which is contaminated with pieces of copper wires, the light fraction, and the non-metallic fraction, is subject to enrichment in the magnetic separator with migrating magnetic field to purify and enhance the portion of magnetic components.

The ferrite fillers obtained by the above-described process have properties close to the properties of the presently used heavy liquid fillers, such as the magnetite (MP) and ferrosilicon (SiFe) fillers. Fig. 6 shows a graph of the content of particular particle sizes for a ferrite filler of the invention (OF), and the magnetite (MP) and ferrosilicon (SiFe) fillers available on the market. As it is demonstrated in the chart, the method of the invention results in the ferrite filler of the grain size distribution close to the presently used MP and SiFe fillers.

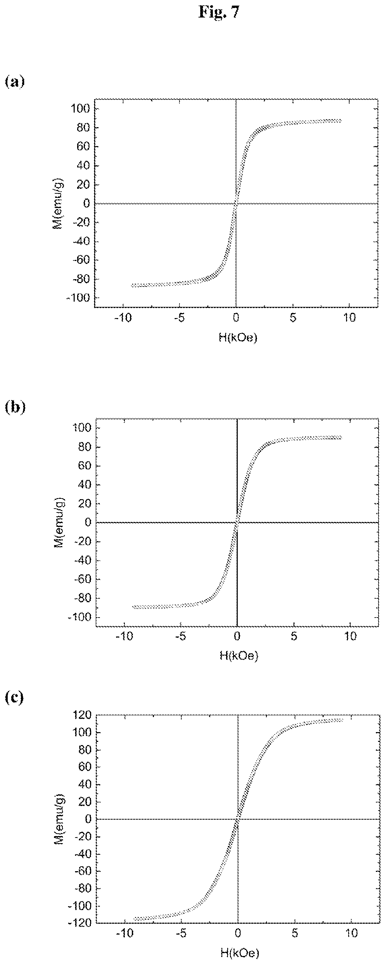

The ferrite fillers of the invention exhibit magnetic properties close to the MP and SiFe fillers available on the market. Studies conducted by the inventors concerning magnetic properties of the ferrite fillers revealed that they have magnetic susceptibility not much lower than the industrial magnetite and fulfil requirements of the relevant standard. Fig. 7 demonstrates the magnetization as a function of the magnetic field intensity for the ferrite filler of the invention (a), and the magnetite (b) and ferrosilicon (c) fillers available on the market. Therein, 1kOe = 79.6kA/m and lemu/g = 1Am²/kg.

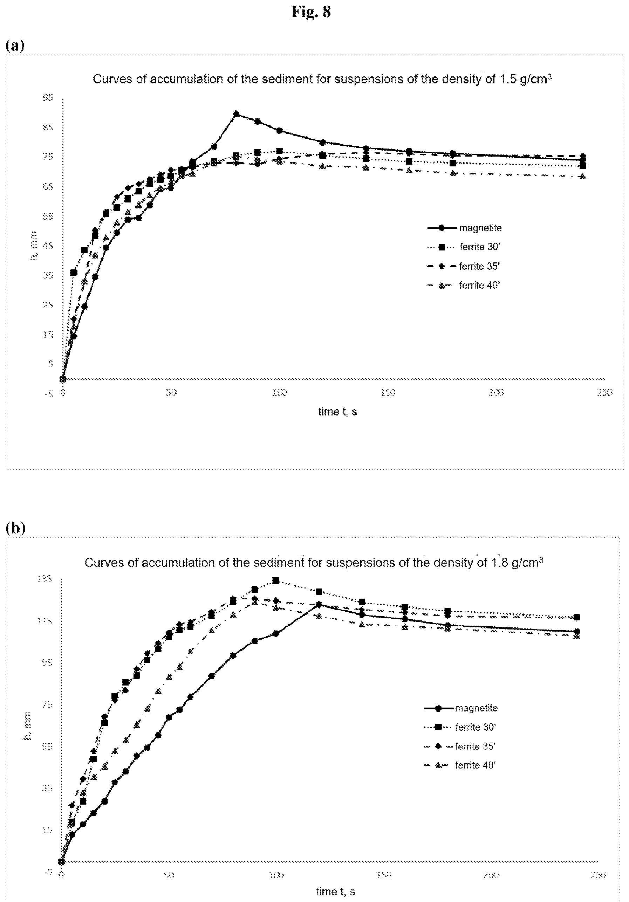

The inventors conducted also the studies concerning assessment of stability of the heavy liquids obtained with the ferrite fillers. The sedimentation tests allow to conclude that suspensions made from the magnetite and ferrite filler behave similarly. Fig. 8 shows curves of accumulation of the sediment for suspensions of the ferrite fillers of the invention and the magnetite filler of the density 1,5 g/cm³ (a) and 1,8 g/cm³ (b) available on the market.

The examination of the properties of ferrite made by method of the invention reveal that it may be used as a filler for heavy liquid suspensions. It may be used alone or in combination with available fillers such as magnetite.

### EXAMPLE 1 Process of selective crushing, milling and screen classification

Feed in the ferromagnetic fraction electronic waste was subjected to the process of selective comminuting in roll crushers, ball mill and screening the ferromagnetic fraction along with dedusting. The studies lead to obtaining the optimum scheme of isolating the ferrite fraction presented in Fig. 3.

In this system, it is necessary to combine a roll crusher with a screen equipped with sieves of a size larger or equal to the lower limit of the size grade of the feed. In this way, from the feed having granulometric characteristic of 6,3-25 mm, the product of 0-28 mm is obtained, from which a metallic ferrite-free fraction of 10-28 mm is screened off. The 6,3-10 mm fraction is subjected to crushing in a roll crusher in system II and classification in the one-deck screen, where a metallic fraction of 6,3-12 mm and a ferrite fraction of 0-6,3 mm are obtained. Both fractions from the second and third screens are combined and recycled to the first screen, where 0-1 and 1-6,3 mm grain fractions are screened off. The 1-6,3 mm fraction is subject to the subsequent crushing in a roll crusher (system III) and screening in the 4 and 1 mm sieves. The contaminated 1-4 mm ferrite fraction is collected in a charging hopper and milled in a periodically operating ball mill. The chart shown in Fig. 5 presents results for the increment of the 0-1 mm ferrite fraction output as a function of the grinding time, which demonstrates that from the feed of 1-4 mm directed to the mill, the major portion of ferrite may be recovered even after 10 min. Moreover, after 30 min the entire ferrite is comminuted into particles of < 1 mm, which comprises 62% of ferrite in the mill's feed. After milling, the product should be recycled to the screen, where 0-1 mm ferrite fraction and metallic 1-4 mm fraction is screened off. The ferrite fraction is subject to a further process of electromagnetic separation to purify the ferrite.

### EXAMPLE 2 Comparing physical-chemical properties of the fillers

Properties of the filler of the invention made from the ferrite fraction (OF) and, for the comparison, the fillers used in industry: magnetite (MP) and ferrosilicon (Si-Fe) filler are examined.

Results of the examination of humidity, and density and bulk density are presented in Table 1.

**Table 1**

| Property | Unit | Filler | | |
|---|---|---|---|---|
| | | OF | MP | Si-Fe |
| Humidity | % | 0.2 | 3.69 | - |
| Density | g/cm³ | 4.922 | 5.138 | 7.022 |
| Bulk density | g/cm³ | 2.36 | 2.40 | 3.47 |

Results of the examination were presented in Table 2 and in Fig. 6. It should be noted that the granulometric properties of the fillers are selected taking into consideration requirements of a specific customer, and that is why the analyzed content of the particular size grades of industrially used fillers diverge from the ones identified in the standard.

In the case of a ferrite filler, its preparation process allowed to obtain the contents of particular size grades close to the magnetite filler.

**Table 2**

| Size grade [mm] | Unit | Filler | | |
|---|---|---|---|---|
| | | OF | MP | Si-Fe |
| >0.15 | % | 13.4 | 11.8 | 3.8 |
| 0.15 - 0.06 | % | 37.1 | 34.7 | 32.7 |
| 0.06 - 0.04 | % | 9.9 | 10.4 | 11.1 |
| < 0.04 | % | 39.6 | 43.1 | 52.5 |

### EXAMPLE 3 Examination of the magnetic properties of the ferrite and industrial fillers

To determine the magnetic properties of the ferrite obtained by the method of the invention and the industrial fillers: magnetite (MP) and ferrosilicon (Si-Fe) the following measuring methods were used:
a) magnetometry of the vibrating sample;
b) Mössbauer spectroscopy
c) magnetic separation.

### The examination was conducted at the ambient temperature (20°C = 293 K)

By means of a precision vibrating magnetometer, magnetization measurements of samples in the function of the magnetic field intensity generated by an electromagnet were conducted. Plots of this relationship for the particular samples are presented in Fig. 7.

To refer the results to the standard PN-92/G-04601, values of magnetization for Si-Fe, MP and OF samples were compared at the magnetic field intensity of 3 kOe (which corresponds to 240 kA/m listed in the standard) with the magnetization value at the same field intensity for the sample of the industrial magnetite (MP). In this way, values of relative magnetic susceptibility for these samples relative to magnetite were obtained. The corresponding values for magnetization and relative susceptibility are listed in Table 3.

**Table 3**

| **Sample** | **Magnetic field intensity H (kOe)** | **Magnetization M (emu/g)** | **Relative susceptibility (%)** |
|---|---|---|---|
| MP | 3 | 85.2 | 100 |
| SiFe | 3 | 92.3 | 108 |
| OF | 3 | 82.5 | 97 |

The above results demonstrate that the ferrite filler samples obtained from processing of the magnetic fraction from the printed circuit boards have the magnetic susceptibility not much lower than the industrial magnetite and fulfil standard requirements in this field.

The remaining examination confirmed also the corresponding properties of the ferrite filler (data not presented).

### EXAMPLE 4 Assessment of stability of heavy liquids - sedimentation tests

The suspensions were prepared according to the requirements of the standard. The calculated amount of the filler was weighed, placed in a cylinder and water at the temperature of 20°C was poured to obtain precisely 0,5 dm³ of the suspension. The suspensions were then mixed and left for 30 minutes to thoroughly wet the grains of the filler. Immediately before the measurement the suspensions were once again mixed thoroughly and, at the start of a stop-watch readings of the turbidity level at the height scale were recorded. In the first phase, the readings were taken every 5 seconds, and subsequently every 10 and 20 seconds. The last measurement was made after 4 minutes of sedimentation.

The measurement was based on reading of the height of the border between the clear water layer, and the concentrating suspension layer. In the case of suspensions where the border was invisible, the sediment height was read.

The results of the sedimentation tests are presented in Fig. 8, which present curves of sediment accumulation for suspensions of density of 1,5 g/cm³ (a) and 1,8 g/cm³ (b) for the ferrite fillers of the invention (prepared by milling for 30, 35 and 40 min.) and the magnetite filler available on the market.

Analysis of the results of the sedimentation tests leads to a conclusion that the suspensions behave similarly. The values of the final concentrations, and weight and volume parts of the sediments are on the same level (data not presented).

## Claims

1. Method of preparation of a ferrite heavy liquid suspension filler, comprising comminution and mechanical classification of fractions, **characterized in that** it comprises steps of
a) classifying a comminuted ferrite fraction of a waste material in a mechanical 0,2 - 2 mm classifier, to form a fine screened fraction and a coarse fraction,
b) separating the fine screened fraction from step (a) in an electromagnetic separator with migrating magnetic field, where after separating a non-magnetic fraction, a ferrite fraction, which constitutes a filler for a heavy liquid suspension, is obtained,
c1) comminuting the coarse fraction from the 0,2 - 2 mm classifier obtained in step (a) in a crusher, preferably a roll crusher,
c2) classifying the comminuted fraction from step (c1) in a two-deck 2 - 5 mm and 0,2 - 2 mm classifier to form three fractions: finest screened ferrite fraction directed to the electromagnetic separator with migrating magnetic field along with the fine screened fraction from step (a), a coarser ferrite fraction, and coarsest fraction comprising a metallic fraction,
c) comminuting the coarser fraction from step (c2), preferably in a fine grinding mill,
d) recycling the fraction obtained in step (c) to the two-deck 2 - 5 mm and 0,2 - 2 mm classifier in step (c1), and
e) removing the coarsest metallic fraction from the two-deck 2 - 5 mm and 0,2 - 2 mm classifier.

2. The method according to claim 1, wherein the mechanical 0,2 - 2 mm classifier from step (a) is a mechanical 1 mm classifier.

3. The method according to claim 1 or 2, wherein in step (a) a light fraction is seized by a light fraction separator located at the end of the 0,2 - 2 mm classifier.

4. The method according to any one of claims 1 - 3, wherein the two-deck 2 - 5 mm and 0,2 - 2 mm classifier from step (c2) is a two-deck 4 mm and 1 mm classifier.

5. The method according to any one of claims 1 - 4, wherein after step (a) it further comprises step (a1), where the coarse fraction obtained in step (a) from the 0,2 - 2 mm classifier is further separated in a mechanical 5 - 8 mm classifier, wherein the screened fine fraction is directed to the crusher in step (c1), and the coarse fraction is subject to a further treatment comprising the steps of:
f) comminuting a coarse fraction from the 5 - 8 mm classifier from step (a1) in a crusher, preferably a roll crusher,
g) mechanical classification of the fraction obtained in step (f) in a two-deck 8 - 12 mm and 5 - 8 mm classifier, said fraction from step (f) being separated into three fractions: the finest screened ferrite fraction recycled to the mechanical 0,2 - 2 mm classifier from step (a), a coarser ferrite fraction subjected to a further treatment, and the coarsest fraction being the metallic fraction, which is removed from the system along with the metallic fraction from step (e),
h) comminuting the coarser ferrite fraction obtained in step (g) in a crusher, preferably a roll crusher,
i) mechanical classification of the fraction obtained in step (h) in a mechanical 5 - 8 mm classifier, said fraction from step (h) being separated into two fractions: a finer ferrite fraction recycled to the mechanical 0,2 - 2 mm classifier in step (a) and a coarser fraction being a metallic fraction, which is removed from the system along with the metallic fraction from steps (e) and (g).

6. The method according to claim 5, wherein step (a1) is conducted in a mechanical 6,3 mm classifier.

7. The method according to claim 5 or 6, wherein steps (a) and (a1) are conducted in a sole two-deck 5 - 8 mm and 0,2 - 2 mm classifier, preferably, 6,3 and 1 mm classifier.

8. The method according to any one of claims 5 - 7, wherein the two-deck 8 - 12 mm and 5 - 8 mm classifier from step (g) is a two-deck 10 and 6,3 mm classifier.

9. The method according to any one of claims 5 - 8, wherein the mechanical 5 - 8 mm classifier from step (i) is a 6,3 mm classifier.

10. The method according to any one of claims 1 - 9, wherein the process is conducted continuously or in cycles.

11. Use of comminuted ferrite from electronic waste in mineral engineering, wherein the comminuted ferrite from electronic waste is used as a filler to prepare a heavy liquid suspension, which is utilized for enrichment of raw mineral materials in density separation method.

12. The use according to claim 11, wherein the ferrite from electronic waste, is acquired from printed circuit boards, by techniques of selective comminution and mechanical classification.

13. The use according to claim 11 or 12, wherein the raw mineral materials are selected from a group consisting of bituminous coal, iron ores, zinc-lead, manganese, tungsten, tin ores, and non-metallic ores.

14. The use according to any one of claims 11 - 13, wherein the comminuted ferrite from electronic waste is used as a filler in a heavy liquid suspension in combination with standard magnetite and ferrosilicon fillers.

15. A method of enrichment of raw mineral materials in mineral engineering by means of heavy liquid suspension, wherein the heavy liquid suspension is obtained using comminuted ferrite from electronic waste and said heavy liquid suspension is used for density separation of the raw mineral materials.

## Patentansprüche

1. Verfahren zur Herstellung eines schweren flüssigen Ferritsuspensionsfüllers, das Zerkleinerung und mechanische Sortierung von Fraktionen umfasst, **dadurch gekennzeichnet, dass** es die folgenden Schritte umfasst:
a) Sortierung einer zerkleinerten Ferritfraktion aus dem Abfallmaterial in einer mechanischen 0,2 - 2 mm Sortieranlage, um eine fein gesiebte Fraktion und eine grobe Fraktion zu bilden,
b) Trennung der fein gesiebten Fraktion aus dem Schritt (a) in einem elektromagnetischen Separator mit wanderndem Magnetfeld, wo nach der Trennung der nichtmagnetischen Fraktion eine Ferritfraktion gewonnen wird, die den Füllstoff für eine schwere flüssige Suspension darstellt,
c1) Zerkleinerung der im Schritt (a) gewonnenen Grobfraktion aus der 0,2 - 2 mm Sortieranlage in einer Brechanlage, vorzugsweise einem Walzenbrecher,
c2) Sortierung der zerkleinerten Fraktion aus dem Schritt (c1) in einer zweifachen 2 - 5 mm und 0,2 - 2 mm-Sortieranlage, um drei Fraktionen zu bilden: eine feinst gesiebte Ferritfraktion, die zusammen mit der fein gesiebten Fraktion aus dem Schritt (a) zum elektromagnetischen Separator mit wanderndem Magnetfeld geleitet wird, eine gröbere Ferritfraktion und die gröbste Fraktion, die eine metallische Fraktion umfasst,
c) Zerkleinerung der gröberen Fraktion aus dem Schritt (c2), vorzugsweise in einer Feinmahlanlage,
d) Recycling der im Schritt (c) gewonnenen Fraktion in einer zweistufigen 2 - 5 mm und 0,2 - 2 mm-Sortieranlage im Schritt (c1), und
e) Entfernung der gröbsten Metallfraktion aus der zweifachen 2 - 5 mm und 0,2 - 2 mm-Sortieranlage.

2. Verfahren nach Anspruch 1, wobei die mechanische 0,2 - 2 mm-Sortieranlage aus dem Schritt (a) eine mechanische 1 mm-Sortieranlage ist.

3. Verfahren nach Anspruch 1 oder 2, wobei im Schritt (a) die leichte Fraktion von einem Leichtfraktionsseparator erfasst wird, der sich am Ende der 0,2 - 2 mm-Sortieranlage befindet.

4. Verfahren nach einem der Ansprüche 1 bis 3, wobei die zweifache 2 bis 5 mm und 0,2 bis 2 mm-Sortieranlage aus dem Schritt (c2) eine zweifache Sortieranlage 4 mm und 1 mm-Sortieranlage ist.

5. Verfahren nach einem der Ansprüche 1 bis 4, wobei es nach dem Schritt (a) den weiteren Schritt (a1) umfasst, bei dem die im Schritt (a) aus der 0,2 - 2 mm-Sortieranlage gewonnene Grobfraktion in einer mechanischen 5 - 8 mm-Sortieranlage weiter getrennt wird, wobei die gesiebte Feinfraktion zu der Brechanlage im Schritt (c1) geleitet wird und die Grobfraktion einer weiteren Behandlung unterzogen wird, die die folgenden Schritte umfasst:
f) Zerkleinerung der Grobfraktion aus der 5 - 8 mm-Sortieranlage aus dem Schritt (a1) in einer Brechanlage, vorzugsweise einem Walzenbrecher,
g) mechanische Sortierung der im Schritt (f) gewonnenen Fraktion in einer zweifachen 8 - 12 mm und 5 - 8 mm-Sortieranlage, wobei die Fraktion aus dem Schritt (f) in drei Fraktionen getrennt wird: die feinst gesiebte Ferritfraktion, die in die mechanische 0,2 - 2 mm-Sortieranlage aus dem Schritt (a) zurückgeführt wird, eine gröbere Ferritfraktion, die einer weiteren Behandlung unterzogen wird, und die gröbste Fraktion, die metallische Fraktion ist, die zusammen mit der metallischen Fraktion aus dem Schritt (e) aus dem System entfernt wird,
h) Zerkleinerung der im Schritt (g) gewonnenen gröberen Ferritfraktion in einer Brechanlage, vorzugsweise einem Walzenbrecher,
i) mechanische Sortierung der im Schritt (h) gewonnenen Fraktion in einer mechanischen 5 - 8 mm-Sortieranlage, wobei die Fraktion aus dem Schritt (h) in zwei Fraktionen getrennt wird: eine feinere Ferritfraktion, die in die mechanische 0,2 - 2-mm-Sortieranlage im Schritt (a) zurückgeführt wird, und eine gröbere Fraktion, die eine metallische Fraktion ist, die zusammen mit der metallischen Fraktion aus den Schritten (e) und (g) aus dem System entfernt wird.

6. Verfahren nach Anspruch 5, wobei der Schritt (a1) in einer mechanischen 6,3 mm-Sortieranlage durchgeführt wird.

7. Verfahren nach Anspruch 5 oder 6, wobei die Schritte (a) und (a1) in derselben zweifachen 5 - 8 mm und 0,2 - 2 mm-Sortieranlage, vorzugsweise 6,3 und 1 mm-Sortieranlage, durchgeführt werden.

8. Verfahren nach einem der Ansprüche 5 bis 7, wobei die zweifache 8 - 12 mm und 5 - 8 mm-Sortieranlage aus dem Schritt (g) eine zweifache 10 mm und 6,3 mm-Sortieranlage ist.

9. Verfahren nach einem der Ansprüche 5 bis 8, wobei die mechanische 5 - 8 mm-Sortieranlage aus dem Schritt (i) eine 6,3 mm Sortieranlage ist.

10. Verfahren nach einem der Ansprüche 1 bis 9, wobei der Prozess kontinuierlich oder zyklisch durchgeführt wird.

11. Verwendung von zerkleinertem Ferrit aus dem Elektronikschrott für Mineral-Engineering, wobei der zerkleinerte Ferrit aus dem Elektronikschrott als Füllstoff zur Herstellung einer schweren flüssigen Suspension verwendet wird, die zur Anreicherung von mineralischen Rohstoffen in einem Dichtetrennverfahren eingesetzt wird.

12. Verwendung nach Anspruch 11, wobei der Ferrit aus dem Elektronikschrott mithilfe der Techniken der selektiven Zerkleinerung und mechanischen Sortierung aus gedruckten Leiterplatten gewonnen wird.

13. Verwendung nach Anspruch 11 oder 12, wobei die mineralischen Rohstoffe aus einer Gruppe ausgewählt werden, die Steinkohle, Eisenerzen, Zink-Blei, Mangan, Wolfram, Zinnerzen und nichtmetallischen Erzen umfasst.

14. Verwendung nach einem der Ansprüche 11 bis 13, **dadurch gekennzeichnet, dass** der zerkleinerte Ferrit aus dem Elektronikschrott als Füllstoff für eine schwere flüssige Suspension in Kombination mit handelsüblichen Magnetit- und Ferrosiliziumfüllstoffen verwendet wird.

15. Verfahren zur Anreicherung von mineralischen Rohstoffen im Mineral-Engineering mittels einer schweren flüssigen Suspension, wobei die schwere flüssige Suspension unter Verwendung vom zerkleinerten Ferrit aus dem Elektronikschrott gewonnen wird und die schwere flüssige Suspension zur Dichtetrennung von mineralischen Rohstoffen verwendet wird.

## Revendications

1. Procédé de préparation d'une charge de suspension liquide lourde de ferrite, comprenant un broyage et une classification mécanique des fractions, **caractérisé en ce qu'**il comprend les étapes suivantes
a) la classification d'une fraction de ferrite broyée d'un déchet dans un classificateur mécanique de 0,2 à 2 mm, pour former une fraction finement tamisée et une fraction grossière,
b) la séparation de la fraction finement tamisée de l'étape (a) dans un séparateur électromagnétique à champ magnétique migrant, où, après séparation d'une fraction non magnétique, on obtient une fraction de ferrite, qui constitue une charge pour une suspension liquide lourde,
c1) le broyage de la fraction grossière provenant du classificateur de 0,2 à 2 mm obtenu à l'étape (a) dans un concasseur, de préférence un concasseur à rouleaux,
c2) la classification de la fraction broyée de l'étape (c1) dans un classificateur à deux étages de 2 à 5 mm et de 0,2 à 2 mm pour former trois fractions: une fraction de ferrite à tamisage fin dirigée vers le séparateur électromagnétique à champ magnétique migrant avec la fraction finement tamisée de l'étape (a), une fraction de ferrite plus grossière et la fraction la plus grossière comprenant une fraction métallique,
c) le broyage de la fraction la plus grossière de l'étape (c2), de préférence dans un broyeur fin,
d) le recyclage de la fraction obtenue à l'étape (c) vers le classificateur à deux étages de 2 à 5 mm et de 0,2 à 2 mm de l'étape (c1), et
e) la suppression de la fraction métallique la plus grossière du classificateur à deux étages de 2 à 5 mm et de 0,2 à 2 mm.

2. Procédé selon la revendication 1, dans lequel le classificateur mécanique de 0,2 - 2 mm de l'étape (a) est un classificateur mécanique de 1 mm.

3. Procédé selon la revendication 1 ou 2, dans lequel à l'étape (a) une fraction légère est saisie par un séparateur de fraction légère situé à l'extrémité du classificateur de 0,2 - 2 mm.

4. Procédé selon l'une quelconque des revendications 1 à 3, dans lequel le classificateur à deux étages de 2 à 5 mm et 0,2 à 2 mm de l'étape (c2) est un classificateur à deux étages de 4 mm et 1 mm.

5. Procédé selon l'une quelconque des revendications 1 à 4, dans lequel, après l'étape (a), il comprend en outre l'étape (a1), où la fraction grossière obtenue à l'étape (a) à partir du classificateur de 0,2 à 2 mm est encore séparée dans un classificateur mécanique de 5 à 8 mm, où la fraction fine tamisée est dirigée vers le concasseur à l'étape (c1), et la fraction grossière est soumise à un traitement supplémentaire comprenant les étapes suivantes:
f) le broyage d'une fraction grossière provenant du classificateur de 5 à 8 mm de l'étape (a1) dans un concasseur, de préférence un concasseur à rouleaux,
g) la classification mécanique de la fraction obtenue à l'étape (f) dans un classificateur à deux étages de 8 à 12 mm et de 5 à 8 mm, ladite fraction de l'étape (f) étant séparée en trois fractions: la fraction de ferrite tamisée la plus fine recyclée dans le classificateur mécanique de 0,2 à 2 mm de l'étape (a), une fraction de ferrite plus grossière soumise à un traitement supplémentaire, et la fraction la plus grossière étant la fraction métallique, qui est retirée du système avec la fraction métallique de l'étape (e),
h) le broyage de la fraction de ferrite la plus grossière obtenue à l'étape (g) dans un concasseur, de préférence un concasseur à rouleaux,
i) la classification mécanique de la fraction obtenue à l'étape (h) dans un classificateur mécanique de 5 à 8 mm, ladite fraction de l'étape (h) étant séparée en deux fractions: une fraction de ferrite plus fine recyclée dans le classificateur mécanique de 0,2 à 2 mm de l'étape (a) et une fraction plus grossière qui est une fraction métallique, qui est retirée du système avec la fraction métallique des étapes (e) et (g).

6. Procédé selon la revendication 5, dans lequel l'étape (a1) est réalisée dans un classificateur mécanique de 6,3 mm.

7. Procédé selon la revendication 5 ou 6, dans lequel les étapes (a) et (a1) sont réalisées dans un classificateur unique à deux étages de 5 - 8 mm et 0,2 - 2 mm, de préférence de 6,3 et 1 mm.

8. Procédé selon l'une quelconque des revendications 5 à 7, dans lequel le classificateur à deux étages de 8 à 12 mm et de 5 à 8 mm de l'étape (g) est un classificateur à deux étages de 10 et 6,3 mm.

9. Procédé selon l'une quelconque des revendications 5 à 8, dans lequel le classificateur mécanique de 5 à 8 mm de l'étape (i) est un classificateur de 6,3 mm.

10. Procédé selon l'une quelconque des revendications 1 à 9, dans lequel le processus est conduit en continu ou par cycles.

11. Utilisation de ferrite broyée provenant de déchets électroniques dans l'ingénierie minérale, dans laquelle la ferrite broyée provenant de déchets électroniques est utilisée comme charge pour préparer une suspension liquide lourde, qui est utilisée pour enrichir des matières minérales brutes dans une méthode de séparation par densité.

12. Utilisation selon la revendication 11, dans laquelle la ferrite provenant de déchets électroniques est obtenue à partir de cartes de circuits imprimés, par des techniques de broyage sélectif et de classification mécanique.

13. Utilisation selon la revendication 11 ou 12, dans laquelle les matières minérales brutes sont choisies dans un groupe constitué par le charbon bitumineux, les minerais de fer, le zinc-plomb, le manganèse, le tungstène, les minerais d'étain et les minerais non métalliques.

14. Utilisation selon l'une quelconque des revendications 11 à 13, dans laquelle la ferrite broyée provenant de déchets électroniques est utilisée comme charge dans une suspension liquide lourde en combinaison avec des charges standard de magnétite et de ferrosilicium.

15. Procédé d'enrichissement de matières minérales brutes en ingénierie minérale au moyen d'une suspension liquide lourde, dans lequel la suspension liquide lourde est obtenue en utilisant de la ferrite broyée provenant de déchets électroniques et ladite suspension liquide lourde est utilisée pour la séparation par densité des matières minérales brutes.
